# EUROPÄISCHE PATENTSCHRIFT

(11) **EP 1 875 181 B1**
(45) Veröffentlichungstag und Bekanntmachung des Hinweises auf die Patenterteilung: **12.10.2016**
(21) Anmeldenummer: 06763050.9
(22) Anmeldetag: 21.04.2006
(51) Int. Cl.: G01K 17/00, G01N 25/48, G01K 7/02

(54) **THERMOANALYTISCHER SENSOR**
THERMOANALYTIC SENSOR
CAPTEUR THERMOANALYTIQUE

(30) Priorität: 25.04.2005 EP 05103341
(43) Veröffentlichungstag der Anmeldung: 09.01.2008
(73) Patentinhaber: Mettler-Toledo GmbH, 8606 Greifensee (CH)
(72) Erfinder: HÜTTER, Thomas, CH-5443 Niederrohrdorf (CH); ZUMBACH, Melchior, CH-5600 Lenzburg (CH)
(86) Internationale Anmeldenummer: PCT/EP2006/061746
(87) Internationale Veröffentlichungsnummer: WO 2006/114394

(56) Entgegenhaltungen:
- DE-A1- 3 916 311
- US-A- 5 989 398
- US-A- 6 036 927
- US-A1- 2003 128 096

## Beschreibung

Die Erfindung betrifft einen thermoanalytischen Sensor für kalorimetrische Messungen.

Kalorimetrische Messungen dienen dazu, sowohl die bei chemischen oder physikalischen Prozessen umgesetzten Wärmemengen, als auch die spezifische Wärme einer Substanz zu ermitteln. Dazu wird die Substanz bzw. eine Probe der Substanz in einem Kalorimeter kontrolliert erwärmt und der Wärmestrom zwischen einer Probe der Substanz und einer Temperiervorrichtung mittels eines thermoanalytischen Sensors verfolgt. Der Wärmestrom wird häufig über die Temperaturdifferenzen entlang des Wärmestrompfads zwischen Probe und Temperiervorrichtung ermittelt.

Ein Kalorimeter umfasst im Allgemeinen mindestens eine Messkammer mit einem thermoanalytischen Sensor auf dem mindestens eine Messposition ausgebildet ist. Der Sensor ist thermisch einerseits mit einer Temperiervorrichtung und andererseits mit einer mit dem Sensor in Kontakt stehenden Probe und/oder einer Referenz gekoppelt. Die Temperiervorrichtung und/oder der Sensor ist über geeignete Mittel mit mindestens einer Steuer- und/oder Regeleinheit verbunden.

Kalorimeter können zum Beispiel im Bereich der Thermoanalyse für die Untersuchung verschiedenster Substanzen eingesetzt werden. Im Allgemeinen wird eine Probe der Substanz auf eine auf dem Sensor ausgebildete Probenposition gelegt und mittels einer Temperiervorrichtung erwärmt, wobei sich die Probe meist in einem speziellen, verschliessbaren Tiegel befindet. Der zwischen der Temperiervorrichtung und der Probe fliessende Wärmestrom wird ermittelt und ausgewertet. Auf diese Weise können Informationen über die Struktur und die Zusammensetzung der Substanz ermittelt werden, wie beispielsweise die Wärmekapazität, Phasenübergänge und die Oxidationsstabilität. Weiterhin können kinetische Reaktionen verfolgt werden und/oder Reinheitsbestimmungen durchgeführt werden.

Bei kalorimetrischen Messungen, welche mit einer hohen Genauigkeit und über einen grossen Temperaturbereich hinweg durchgeführt werden sollen, wird im Allgemeinen der Wärmestrom einer Probe in Relation zum Wärmestrom einer Referenz bestimmt. Kalorimetrische Messungen können sowohl in Kalorimetern mit getrennten Messkammern als auch in solchen mit einer gemeinsamen Messkammer für mindestens eine Probe und mindestens eine Referenz durchgeführt werden.

Für genaue Messungen mit hoher Reproduzierbarkeit ist es wichtig, dass der Sensor eine hohe mechanische, chemische sowie thermische Beständigkeit aufweist. Bekannte Sensoren umfassen häufig einen scheibenförmigen Träger mit mindestens einer Thermoelementanordnung und mindestens einer auf dem Sensor ausgebildeten Messposition. Die Thermoelementanordnung wie auch die Messposition kann beispielsweise mittels der Dünnfilmtechnik oder der Dickfilmtechnik ausgebildet werden.

Sensoren, welche mit der Dünnfilmtechnik aufgebrachte Thermoelemente aufweisen, die von einer Thermoelementanordnung umfasst werden, sind beispielsweise aus F. X. Eder, Arbeitsmethoden der Thermodynamik, Band 2, Springer-Verlag 1983 S. 240 bekannt. Nachteilig an mittels der Dünnfilmtechnik hergestellten Sensoren ist der aufwändige Herstellprozess und die sehr geringe maximal realisierbare Dicke sowie ihre häufig nur geringe mechanische und/oder chemische Beständigkeit.

Widerstandsfähigere Sensoren können mittels der Dickfilmtechnik hergestellt werden. Die DE 39 16 311 C2 offenbart einen Sensor mit jeweils einer darauf ausgebildeten Proben- und Referenz-Messposition und mindestens zwei Thermoelementanordnungen.

In Dickfilmtechnik hergestellte Sensoren können mehrere auf einem Träger ausgebildete Dickfilmschichten aufweisen. Die Gesamtschichtdicke beträgt maximal etwa 100 µm, wobei die einzelnen Schichten typischerweise eine Dicke zwischen 5-20 µm aufweisen. Die einzelnen Schichten können elektrische Schaltungen wie beispielsweise Thermoelementanordnungen aufweisen und sind voneinander durch eine Isolierschicht getrennt. Die Schichten werden mittels Pasten und Siebdrucktechniken aufgebracht und in der Regel muss nach jedem Druckvorgang ein Brennprozess stattfinden. Dies macht den Herstellungsprozess insbesondere bei mehreren Schichten sehr zeitintensiv. Das häufige Sintern kann sich nachteilig auf die Struktur und die Eigenschaften der verwendeten Schichtmaterialien und/oder den Träger auswirken.

Zur Ausbildung von Thermoelementen, werden mindestens zwei unterschiedlichen Thermopasten auf den meist keramischen Träger aufgebracht. Zwischen jeweils zwei von einander beabstandet angeordneten Thermoelementen kann eine Spannungsdifferenz vorliegen mittels derer eine Temperaturdifferenz ermittelt werden kann. Die Thermoelemente können in vorgegebenen Mustern angeordnet werden, welche bei der Auftragung der entsprechenden Dickfilmschichten vorgegeben werden.

Sowohl mit der Dünnfilmtechnik als auch mit der Dickfilmtechnik können im Wesentlichen zweidimensionale Thermoelementanordnungen realisiert werden, welche Temperaturänderungen innerhalb der mit Thermoelementen versehenen Schicht des Sensors erfassen. In der Regel befinden sich die Thermoelemente im Wesentlichen in einer horizontalen Schicht des Sensors, welche der Sensoroberfläche entspricht oder nahe dieser angeordnet ist.

Die Wärmeströme im Sensor fliessen jedoch nicht nur innerhalb einer Schicht, sondern breiten sich dreidimensional im gesamten Sensor aus. Mit einer in Dünn- oder Dickfilmtechnik ausgestalteten, im Wesentlichen zweidimensionalen Thermoelementanordnung kann daher nur ein Teil des Wärmestroms vermessen werden, wodurch das Messergebnis mit einer entsprechenden Unsicherheit behaftet ist.

Damit ergibt sich als Aufgabe der Erfindung die Bereitstellung eines thermoanalytischen Sensors für kalorimetrische Messungen, welcher im Vergleich zu herkömmlichen Sensoren eine höhere Empfindlichkeit und vor allem eine grössere strukturelle Flexibilität aufweist.

Gelöst wird diese Aufgabe durch den im Anspruch 1 definierten Sensor. Ein thermoanalytischer Sensor für kalorimetrische Messungen wirkt mit einer Temperiervorrichtung zusammen und umfasst mindestens eine auf dem Sensor ausgebildete Messposition und ein Temperaturmesselement. Zwischen dieser Messposition und der Temperiervorrichtung bildet sich ein Wärmestrompfad aus. Der Sensor weist im Wesentlichen mehrere Lagen auf, welche aus durch gemeinsames Sintern fest miteinander verbundenen Keramikelementen ausgebildet sind. Die Keramikelemente sind im Wesentlichen aus einer im grünen Zustand strukturierbaren Keramik ausgebildet. Zumindest ein Teil der den Sensor bildenden Keramikelemente ist strukturiert.

Mit Lage wird die Position und Ausdehnung eines Keramikelements im Sensor nach dem gemeinsamen Sintern bezeichnet. Mit Keramikelement wird im Folgenden ein Keramikelement im ungesinterten bzw. grünen Zustand bezeichnet. Durch das gemeinsame Sintern wird eine feste Verbindung zwischen den Keramikelementen erzeugt und eine nahezu monolithische Einheit ausgebildet. Der Begriff Lage dient vor allem dem besseren Verständnis des Sensoraufbaus.

Die US 5,989,398 A offenbart beispielsweise einen Gassensor mit einem mehrlagigen keramischen Substrat, welches mehrere Lagen aufweist, die gemeinsam laminiert und gesintert werden.

Die einzelnen Keramikelemente können vor dem Sintern individuell strukturiert werden, wodurch die Form und die Struktur des Sensors nahezu beliebig angepasst und gestaltet werden kann. Ein Sensor wird in der Regel sowohl aus strukturierten als auch aus unstrukturierten Keramikelementen ausgebildet. Die Keramikelemente werden einmal gemeinsam gesintert und erfahren somit eine identische Erwärmung, wodurch die thermische Belastung einzelner Keramikelemente möglichst klein gehalten wird. Dies ist vorteilhaft, da so Spannungen im Sensor vermieden werden, welche durch unterschiedliche thermische Belastung einzelner Bereiche entstehen können.

Die Keramikelemente sind aus einer Keramik bzw. einem keramischen Material, vorzugsweise derselben Keramik, ausgebildet. Diese Keramik ist im ungesinterten oder grünen Zustand strukturierbar. Die Verwendung einer einzigen Keramik ist vorteilhaft, da so die Keramikelemente mit denselben Verfahren strukturiert und die Herstellungskosten erheblich reduziert werden können.

Der Sensor weist zur Ermittlung des Wärmestroms mindestens eine Thermoelementanordnung auf, welche entlang des Wärmestrompfads ausgebildet ist.

Die Thermoelementanordnung erzeugt ein thermoelektrisches Signal über das der Wärmestrom auf bekannte Weise ermittelt werden kann.

Die Ermittlung des Wärmestroms erfolgt im Allgemeinen direkt oder indirekt über die Bestimmung eine Temperatur. Je nach Ausgestaltung kann mittels des mindestens einen Temperaturmesselements eine Absoluttemperatur oder auch eine Temperaturdifferenz ermittelt werden. Ein Temperaturmesselement kann beispielsweise einen elektrischen Widerstand oder eine mindestens zwei Thermoelemente aufweisende Messstrecke umfassen.

Mindestens zwei voneinander beabstandete Thermoelemente können eine Messstrecke ausbilden, welche wiederum durch geeignete Kontaktierung einen Teil einer Thermoelementanordnung darstellen kann. Mittels einer Messstrecke kann die Temperaturdifferenz zwischen den von der Messstrecke umfassten Thermoelementen bestimmt werden. Handelt es sich bei der Messstrecke um eine sogenannte cold junction, welche ein im Sensor ausgebildetes Thermoelement und ein ausserhalb des Sensors ausgebildetes Thermoelement umfasst, so kann diese ebwenfalls zur Bestimmung einer Absoluttemperatur verwendet werden.

Mindestens eines der von der Thermoelementanordnung umfassten Thermoelemente ist innerhalb oder auf einer Lage des Sensors ausgebildet.

Der sich innerhalb oder auf einer Lage ausdehnende Wärmestrom kann durch mindestens eine Messstrecke erfasst werden. Die Thermoelemente, welche die Messstrecke bilden, können dabei innerhalb und/oder auf einer Lage oder auch innerhalb und/oder auf verschiedenen Lagen ausgebildet sein.

Die Erfassung des sich zweidimensional auf oder innerhalb einer Lage ausdehnenden Wärmestroms erfolgt in der Regel über mehrere Messstrecken, welche meist einen Teil der Thermoelementanordnung darstellen und auf und/oder innerhalb einer Lage angeordnet sind.

Zur Ermittlung des Wärmestroms welcher sich senkrecht zu einer Lage ausbreitet, kann eine Thermoelementanordnung ausgebildet werden, welche im Wesentlichen Messstrecken umfasst, die zwischen zwei oder mehr Lagen ausgebildet sind.

In einem bevorzugten Ausführungsbeispiel weist der Sensor mehrere Messstrecken auf, welche Thermoelemente umfassen, die auf und/oder innerhalb einer Lage und/oder auf und/oder innerhalb verschiedener Lagen angeordnet sind. Auf diese Weise wird die dreidimensionale Erfassung der sich ausdehnenden Wärmeströme ermöglicht.

Ein Thermoelement, besteht in der Regel aus zwei unterschiedlichen, mit einander in Kontakt stehenden elektrisch leitenden Materialien. Vorzugsweise werden die Thermoelemente durch Aufbringen und/oder Einbringen von metallhaltigen Thermopasten auf und/oder in die Keramikelemente hergestellt. Die Keramikelemente können beispielsweise in Siebdrucktechnik mit mindestens zwei unterschiedlichen Thermopasten bedruckt werden oder es können in einzelnen Keramikelementen erzeugte Aussparungen mit verschiedenen Thermopasten verfüllt werden. Bekannte Thermoelemente umfassen Materialien wie Gold, Silber, Kupfer, Palladium und Platin sowie Legierungen dieser Metalle. Unter Aussparung werden in diesem Zusammenhang sowohl Vertiefung als auch Durchführungen in einem Keramikelement verstanden.

Der Sensor kann in Relation zur Messposition horizontal und/oder vertikal angeordnete Messstrecken aufweisen, wobei ein oder mehrere mindestens zwei Thermoelemente umfassende Messstrecken, vorzugsweise nicht nur innerhalb und/oder auf einer Lage sondern auch auf und/oder zwischen zwei oder mehr Lagen ausgebildet werden.

Die Ausbildung von horizontalen und/oder vertikalen Messstrecken ermöglicht es, die Ausbreitung des Wärmestroms sowohl horizontal als auch vertikal zu verfolgen. Die Anordnung der verschiedenen Messstrecken ist sehr flexibel, so dass je nach Ausgestaltung des Sensors beispielsweise auch Thermoelemente umfassende Messstrecken in den vertikalen Wänden von im Sensor integrierten Aussparungen zur Aufnahme der Probe oder Referenz ausgebildet werden können. Je nach Anordnung der Messstrecken kann der sich ausdehnende Wärmestrom zwei- oder dreidimensional verfolgt werden.

Die Kombination von horizontalen und vertikalen Messstrecken ermöglicht zudem eine echte dreidimensionale Anordnung der Thermoelemente und damit eine dreidimensionale Erfassung der Wärmeströme im Sensor. Dieses ist sehr vorteilhaft, da die Genauigkeit einer kalorimetrischen Messung von der Anzahl und Anordnung der Thermoelemente im und/oder auf dem Sensor abhängt. Es hat sich gezeigt, dass eine im Wesentlichen kreisförmige Anordnung der Thermoelemente um die Messposition herum besonders vorteilhaft ist. Idealerweise werden die Thermoelemente daher auf einer Sensoroberfläche und/oder in einer Schicht nahe der Sensoroberfläche, sowie auch räumlich im Sensor verteilt, um möglichst alle sich zwischen einer Probe oder Referenz und der Temperiervorrichtung ausbildenden Wärmeströme und Temperaturschwankungen erfassen zu können.

In einem weiteren Ausführungsbeispiel wird mindestens ein nach dem Sintern auf einer Oberfläche des Sensors ausgebildetes Thermoelement von der Thermoelementanordnung umfasst. Dieses Thermoelement wird vorzugsweise in der bekannten Dick- oder Dünnfilmtechnik hergestellt. Es ist auf diese Art auch möglich, nach dem Sintern eine oder mehrere Dick- oder Dünnfilmschichten auf dem Sensor auszubilden. In diesen Schichten können ein oder mehrere Messstrecken als Teil der Thermoelementanordnung ausgebildet sein, mit denen der sich auf der Sensoroberfläche ausbreitenden Wärmestrom erfasst werden kann.

Das Temperaturmesselement kann auch einen elektrischen Widerstand umfassen, welcher entweder innerhalb und/oder auf einer Lage und/oder nach dem Sintern auf einer Oberfläche des Sensors ausgebildet werden kann. Die Temperaturerfassung kann sowohl ausschliesslich über einen oder mehrere elektrische Widerstände, aussschliesslich über Messstrecken als auch über eine Kombination von elektrischen Widerständen und Messstrecken erfolgen. Ein grossflächig ausgebildeter elektrischer Widerstand kann sogar als Heizwiderstand verwendet werden, so dass innerhalb oder auf dem Sensor eine lokale Heizvorrichtung angeordnet ist.

Thermoelemente, elektrische Schaltungen, Widerstände und/oder Heizwiderstände können beispielsweise mittels Siebdrucktechniken vor dem Sintern auf die Keramikelemente oder nach dem Sintern auf einer Oberfläche des Sensors ausgebildet werden.

In einem weiteren Ausführungsbeispiel weist der Sensor mindestens eine Leitung für Fluide, insbesondere für Temperierfluide auf. Über diese Leitung kann der Sensor und/oder die mit dem Sensor in Kontakt stehende Probe oder Referenz temperiert werden. Als Temperierfluide werden vorzugsweise Flüssigkeiten, Gase oder verflüssigte Gase eingesetzt. In Abhängigkeit des Temperierfluids und dessen Temperatur kann der Sensor beheizt und/oder abgekühlt werden. Die Form der Leitung kann beliebig gestaltet werden. Um einen gleichmässigen Wärmeaustausch zwischen dem Temperierfluid und dem Sensor zu gewährleisten, ist es sinnvoll, dass die Fluide durch die Leitungen fliessen, was durch bekannte Vorrichtungen wie beispielsweise eine Pumpe erreicht werden kann.

Aufgrund der Strukturierbarkeit der Keramikelemente ist es möglich, die Wärmeleitfähigkeit mindestens eines Sensorbereichs zu verändern, so dass dieser Bereich eine höhere oder niedrigere Wärmeleitfähigkeit als die Keramik aufweist. Solche Sensorbereiche weisen entweder mindestens eine Aussparung und/oder eine verfüllte Aussparung auf oder umfassen Keramikelemente, welche mit einem Material bedruckt sind, dessen Wärmeleitfähigkeit von der Keramik abweicht.

Die Möglichkeiten zur Strukturierung der einzelnen Keramikelemente hängen von deren Dimensionen und der verwendeten Keramik ab. Es ist vorteilhaft, wenn die verwendeten Keramikelemente ein Aluminiumoxid aufweisen.

Der Sensor entsteht im Wesentlichen durch das gemeinsame Sintern einer Anordnung von einzelnen, strukturierten und/oder unstrukturierten Keramikelementen. Die Grösse der einzelnen Keramikelemente wird dabei an die Dimensionen und die Form des fertigen Sensors angepasst. In Abhängigkeit der Strukturierung einzelner Keramikelemente ist es möglich, thermoanalytische Sensoren mit unterschiedlichen Eigenschaften und Formen auszubilden.

Die Form des Sensors kann die Empfindlichkeit, die Reproduzierbarkeit und dessen Zeitverhalten beeinflussen, da diese Eigenschaften wesentlich durch die räumliche Verteilung der Wärmeströme im Sensor bestimmt werden. Die Empfindlichkeit des Sensors wird vor allem durch den thermischen Widerstand verschiedener Bereiche im Sensor, also die Topologie und dem Material zwischen den Thermoelementen sowie der Anordnung der Temperaturmesselemente und/oder der Messstrecken im Sensor, beeinflusst.

Die Herstellung eines erfindungsgemässen Sensors umfasst verschiedene Schritte und entspricht im Wesentlichen einem sogenannten LTCC-Verfahren (low temperature cofired ceramics).

Als Ausgangsmaterial zur Herstellung der Keramikelemente wird ein ungesintertes oder grünes keramisches Material verwendet. Grüne Keramik, wie sie auch für LTCC Keramiken verwendet wird, ist kommerziell erhältlich und kann entweder rollenweise oder bereits in vorkonfektionierten Folien unterschiedlicher Grösse von verschiedenen Herstellern wie z. B. DuPont oder Heraeus bezogen werden. Das Ausgangsmaterial hat vorzugsweise eine Dicke von etwa 50 bis etwa 300 µm.

Die einzelne Keramikelemente vorgegebener Grösse oder Keramikelement-Arrays, die ähnlich einem Siliziumwafer mehrere Keramikelemente umfassen, welche zu einem späteren Zeitpunkt getrennt werden, werden erzeugt, indem die rollenweise oder bereits als vorgeschnittene Folien vorliegende Keramik zum Beispiel durch Laserschneiden, Sägen, Stanzen, Fräsen oder Ultraschallschneiden in Plättchen, Keramikelemente oder Keramikelement-Arrays zerteilt wird.

Die einzelnen Keramikelemente oder in der industriellen Fertigung Arrays können, wenn gewünscht, anschliessend strukturiert werden. Die Strukturierung der einzelnen Keramikelemente kann sowohl an einzelnen Keramikelementen als auch an einem Array durchgeführt werden. Dieses Array wird dann in einem späteren Verfahrensschritt z. B. nach dem Laminieren oder nach dem Sintern in einzelne Keramikelemente getrennt.

Nach dem Strukturieren werden die Keramikelemente im Allgemeinen gründlich gereinigt.

Die Keramikelemente, welche später einen Sensor bilden sollen, werden in einer vorgegebenen Reihenfolge aufeinander gestapelt. Die Eigenschaften und die Form des Sensors werden im Wesentlichen durch die Abfolge der strukturierten und unstrukturierten Keramikelemente bestimmt.

Der so gebildete Stapel wird vor dem Sintern laminiert, so dass die Keramikelemente bereits vor dem Sintern aneinander haften und sich nicht mehr gegeneinander verschieben können. Das Laminieren geschieht bevorzugt unter Druck oder im Vakuum bei Temperaturen unterhalb von etwa 100°C.

Anschliessend wird der Stapel einmal gesintert. Die Sintertemperaturen sind höher als die Laminiertemperatur und liegen typischerweise unterhalb von etwa 900°C. Durch das Sintern werden die bereits aneinanderhaftenden Keramikelemente fest miteinander verbunden und bilden eine nahezu monolithische Einheit aus.

Die Strukturierung der Keramikelemente kann einen oder mehrere der folgenden Schritte umfassen. Es kann eine oder mehrere Aussparung durch beispielsweise Stanzen, Laserschneiden, Schneiden oder Bohren erzeugt werden. Diese Aussparungen können gegebenenfalls wieder mit verschiedenen Materialien verfüllt werden. Dadurch kann an dieser Stelle im Keramikelement bzw. später in einer Lage die Materialzusammensetzung punktuell und/oder bereichsweise geändert werden. Wenn für das Verfüllen Materialien verwendet werden, die eine von der Keramik abweichende Wärmeleitfähigkeit aufweisen, so kann die Wärmeleitfähigkeit des Sensors punktuell und/oder bereichsweise geändert und angepasst werden. Als Materialien können beispielsweise Metalle wie Gold, Platin, Paladium, Kupfer, Silber und Legierungen dieser Metalle verwendet werden, welche eine hohe bzw. gute Wärmeleitfähigkeit aufweisen, und/oder Gase wie beispielsweise Luft welche eine niedrige bzw. schlechte Wärmeleitfähigkeit aufweisen.

Metalle können beispielsweise in Form von metallhaltigen Pasten eingesetzt werden, deren Eigenschaften an die verwendete Keramik angepasst sind. Es können aber auch andere organische, anorganische oder metallische Materialien zum Verfüllen verwendet werden.

Ausserdem können sowohl derart vorstrukturierte Keramikelemente als auch unstrukturierte Keramikelemente mit verschiedenen Materialien bedruckt oder beschichtet werden. Es kann auch eine Oberfläche des Sensorrohlings nach dem Laminieren oder Sintern noch mit weiteren Schichten beschichtet oder bedruckt werden. Es bietet sich an, dazu die aus der Dick- und/oder Dünnfilmtechnik bekannten Siebdruckverfahren oder auch bekannte Sol-Gel-Verfahren einzusetzen und so unterschiedliche Muster zu erzeugen. Diese Schichten können unter anderem ein oder mehrere weitere Temperaturmesselemente und/oder eine oder mehrere Messpositionen aufweisen.

Eine weitere Möglichkeit zur Strukturierung liegt darin, Keramikelemente unterschiedlicher Grösse zu verwenden, wodurch die äussere Form des Sensors verändert und individuell angepasst werden kann.

Die Bildung von Aussparungen und das anschliessende Verfüllen und/oder das Bedrucken der Keramikelemente und/oder das Bedrucken des gesinterten Sensors kann auch dazu verwendet werden, mindestens eine Messposition auf dem Sensor auszubilden.

Die eingesetzten Keramiken haben häufig die Eigenschaft, dass sie beim Sintern schrumpfen. Daher ist es sinnvoll die einzelnen Keramikelemente etwas grösser herzustellen, als es der Sensor sein soll. Bestehen die Lagen im Wesentlichen aus strukturierten Keramikelementen, so wäre es möglich, dass diese nicht gleichmässig schrumpfen.

Um vorgegebenen Toleranzen bezüglich der Grösse und Form bei der Herstellung einzuhalten, kann es notwendig sein, den Sensor mechanisch nachzubearbeiten. Das mechanische Nachbearbeiten kann beispielsweise eine Trennung eines Stapels von Keramikelement-Arrays, ein Glätten der Kanten des Sensors und/oder auch eine Gestaltung der endgültigen Form des Sensors durch Methoden wie Schneiden, Schleifen, Bohren und/oder Fräsen umfassen. Die Grösse und Form des Sensors kann ausserdem einen Einfluss auf die Empfindlichkeit und die Messgenauigkeit des Sensors haben.

Der Sensor kann nach dem Sintern noch mechanisch nachbearbeitet und das mindestens eine im Sensor ausgebildete Temperaturmesselement kann elektrisch mit einer Messeinheit und möglicherweise auch mit einer Steuer- und/oder Regeleinheit verbunden werden.

Die im Laufe des Herstellungsverfahrens in und/oder auf die Keramikelemente eingebrachten Strukturen und/oder die auf den Sensor aufgebrachten Strukturen bilden im fertigen Sensor verschiedene Elemente aus, wie beispielsweise mindestens ein Temperaturmesselement, eine Thermoelementanordnung, einen elektrischen Widerstand, einen elektrischen Heizwiderstand, ein Thermoelement, eine Messstrecke, eine Leitung für Fluide und/oder einen Sensorbereich mit einer Wärmeleitfähigkeit, welche sich von der der Keramik unterscheidet.

Die Eigenschaften und die Form des Sensors werden wesentlich durch die Abfolge der gleich oder unterschiedlich strukturierten und/oder unstrukturierten Keramikelemente bestimmt. Grössere Hohlräume im Sensor können beispielsweise durch das Aufeinanderlegen mehrerer, an derselben Position Aussparungen und/oder Durchführungen aufweisender Keramikelemente entstehen, wobei es beim Laminieren und Sintern notwendig sein kann, grössere Aussparungen mit einem Platzhalter zu füllen, damit die Form der Aussparung oder des Hohlraums nach dem Sintern erhalten bleibt.

Auf diese Art und Weise ist es sogar möglich, eine oder mehrere rohrartige Leitungen im Sensor auszubilden. Da sich die einzelnen Keramikelemente beim Sintern fest mit einander verbinden, weisen diese Leitungen nach dem Sintern abgeschlossene Wände auf und können mit Temperierfluiden beschickt werden. Als Temperierfluide werden vorzugsweise Flüssigkeiten, Gase oder verflüssigte Gase eingesetzt. In Abhängigkeit des Temperierfluids und dessen Temperatur kann der Sensor so beheizt oder abgekühlt werden. Die Dichtigkeit der Leitungen kann zum Beispiel durch eine nachträgliche Beschichtung der Wände noch verbessert werden.

Die Leitung für die Temperierfluide kann beliebig gestaltet werden, wobei die Leitung spiralförmig unterhalb der Messposition verlaufen oder auch eine im Wesentlichen mäanderartige Form haben kann. Die Leitungen weisen aus dem Sensor herausgehende Anschlüsse auf, über die die Leitungen von aussen mit dem Temperierfluid beschickt werden können. Für eine gleichmässige Wärmeabgabe oder Wärmeaufnahme durch das Fluid ist es notwendig, dass die Fluide durch die Leitungen fliessen können, was durch bekannte Vorrichtungen wie beispielsweise Pumpen erreicht werden kann.

Abschliessend werden das mindestens eine Temperaturmesselement und/oder die Thermoelementanordnung kontaktiert, so dass die Temperatur an einer und/oder verschiedenen Stellen innerhalb und/oder auf dem Sensor gemessen und der Wärmestrom ermittelt werden kann.

Unterschiedliche Ausführungsformen eines thermoanalytischen Sensors werden nachfolgend anhand der Figuren beschrieben. Es zeigen:
- Fig. 1: eine schematische Darstellung eines thermoanalytischen Sensors mit mehreren Messstrecken im Schnitt, welcher thermisch an eine Temperiervorrichtung und über zwei auf dem Sensor ausgebildeten Messpositionen an einen Proben- und einen Referenztiegel gekoppelt ist;
- Fig. 2: eine Teilvergrösserung von Figur 1;
- Fig. 3: eine schematische, vergrösserte Darstellung eines thermoanalytischen Sensors mit horizontal und vertikal angeordneten Messstrecken;
- Fig. 4: eine schematische, vergrösserte Darstellung eines thermoanalytischen Sensors mit einer erhöhten Tiegelauflage;
- Fig. 5: eine schematische, vergrösserte Darstellung eines thermoanalytischen Sensors mit einer abgesenkten Tiegelauflage;
- Fig. 6: eine schematische Darstellung eines thermoanalytischen Sensors mit einer integrierten Probenaufnahme;
- Fig. 7: eine schematische, vergrösserte Darstellung eines thermoanalytischen Sensors, welcher Bereiche mit von der Wärmeleitfähigkeit der Keramik abweichender Wärmeleitfähigkeit aufweist;
- Fig. 8: eine schematische, vergrösserte Darstellung eines thermoanalytischen Sensors mit einer im Sensor ausgebildeten Leitung für Temperierfluide.

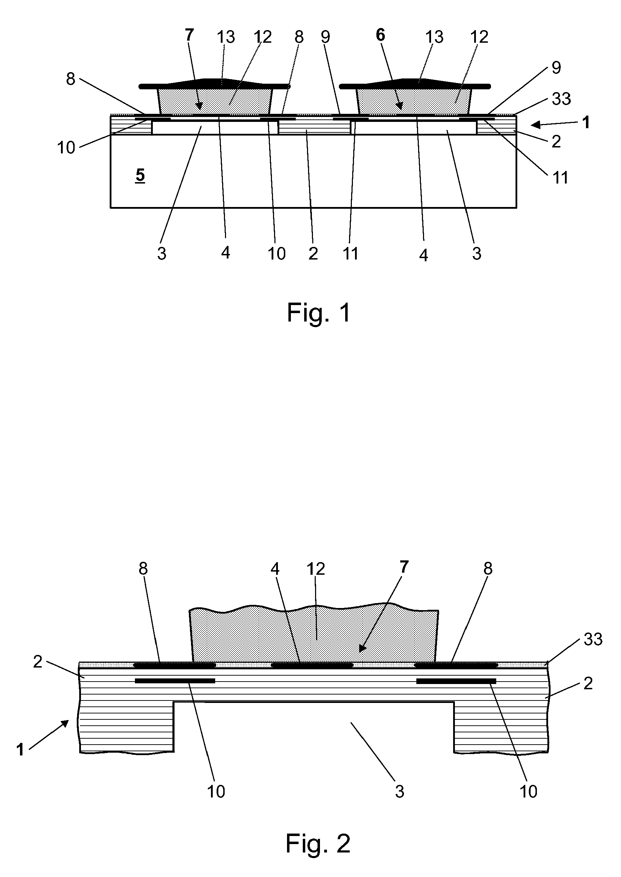

Die Figuren 1 und 2 zeigen ein bevorzugtes Ausführungsbeispiel eines thermoanalytischen Sensors für kalorimetrische Messvorrichtungen. In Figur 1 ist der im Wesentlichen scheibenförmige Sensor 1, welcher mehrere durch gemeinsames Sintern fest miteinander verbundene Lagen 2 und mindestens eine nach dem Sintern auf den Sensor 1 aufgebrachten Schicht 33 umfasst, zusammen mit einer Temperiervorrichtung 5 und je einem Tiegel 12 für eine Probe und eine Referenz dargestellt. Figur 2 zeigt zur besseren Übersicht eine Teilvergrösserung von Figur 1. Die Figuren 1 und 2 werden im Folgenden gemeinsam näher erläutert.

Zum besseren Verständnis der Struktur des Sensors, sind in allen Figuren die einzelnen Lagen dargestellt, obwohl diese nach dem Sintern nicht mehr vollständig voneinander differenzierbar sind, sondern eine nahezu monolithische Einheit darstellen, in welcher die einzelnen Funktionselemente ausgebildet sind.

Der Sensor 1 besteht aus mehreren strukturierten Keramikelementen aus denen durch gemeinsames Sintern bei niedrigen Temperaturen ein mehrere Lagen 2 umfassender Sensor entsteht. Der gesinterte Sensor wird hier anschliessend noch mit mindestens einer weiteren, beispielsweise in Dickfilmtechnik aufgetragenen Schicht 33 beschichtet.

Im Sensor 1 sind durch Strukturierung einzelner Keramiklagen vor dem Sintern und/oder nach dem Sintern an der Unterseite, welche mit der Temperiervorrichtung 5 in Kontakt steht, zwei Aussparungen 3 ausgebildet. Die Aussparungen 3 befinden sich unterhalb der Messpositionen 6, 7 und verringern die Dicke des Sensors in diesen Bereichen Die Aussparungen 3 weisen ein Vakuum auf oder sind luft- oder gasgefüllt. Sie werden durch die Temperiervorrichtung 5 begrenzt, welche hier ein im Wesentlichen aus Silber bestehender Heizblock ist.

Die Oberfläche des Sensors, welche im Betrieb mit den Tiegeln 12 in Kontakt steht, ist im Wesentlichen planar ausgebildet und wird von mindestens einer eine strukturierte Teilschicht und eine Isolations-Teilschicht aufweisenden Schicht 33 bedeckt, welche hier in Dickfilmtechnik aufgetragen ist. Die strukturierte Teilschicht umfasst zwei Messpositionen 6, 7 und jeweils eine um jede Messposition 6, 7 herum ausgebildete Thermoelementanordnung, welche zwei in der strukturierten Teilschicht ausgebildete Messstrecken 8, 9 umfasst. Die Messstrecken 8, 9 weisen jeweils mindestens zwei Thermoelemente auf.

Der in den Figuren 1 und 2 gezeigte Sensor 1 weist mehrere Messstrecken 8, 9, 10, 11 auf. Die Messstrecken 8, 9 sind in der Schicht 33 und die Messstrecken 10, 11 im und/oder auf einer im Sensor liegenden Lage 2 ausgebildet. Die Messstrecken 8, 9, 10, 11 erstrecken sich im Wesentlichen radial um die Messpositionen 6, 7 herum. Auf diese Weise können Temperaturschwankungen nicht nur radial um die einzelnen Messpositionen 6, 7 herum sondern auch in verschiedenen Tiefen unterhalb der Messpositionen 6, 7 erfasst werden.

Zusätzlich befindet sich unter den Tiegeln 12 noch jeweils ein grossflächiger, elektrischer Widerstand 4, welcher in diesem Ausführungsbeispiel in der Schicht 33 ausgestaltet ist und hier als Temperaturmesselement zur Bestimmung einer AbsolutTemperatur dient.

Der Sensor 1 umfasst mehrere Lagen 2, welche aus einer Aluminiumoxid aufweisenden Keramik bestehen, wie sie auch in bekannten LTCC-Verfahren eingesetzt wird. Zur Ausbildung der Messstrecken 10, 11 sind zumindest auf und/oder in einer Lage 2 Thermoelemente aus zwei unterschiedlichen Thermopasten ausgebildet. Die Messstrecken 10, 11 befinden sich im Inneren des Sensors 1.

Die Messstrecken 10, 11 werden bereits vor dem Laminieren durch geeignete Strukturierung einzelner Keramikelemente ausgebildet. Sie ermöglichen zusammen mit den Messstrecken 8, 9 eine dreidimensionale Messung des Wärmestroms, welcher zwischen der zu untersuchenden Substanz und/oder der Referenz und der Temperiervorrichtung 5 fliesst.

Die räumlichen Trennung bzw. der vertikale Abstand der Messstrecken 8, 9 und der Messstrecken 10, 11 ermöglicht die Ausbildung von mindestens doppelt so vielen Thermoelementen im Sensor 1 im Vergleich zu einem herkömmlichen Sensor, da die Thermoelemente auf einer oder mehreren Lagen 2 sowie in der Schicht 33 des Sensors verteilt sind. Die Empfindlichkeit des Sensors wird dadurch im Vergleich zu herkömmlichen Sensoren erhöht.

Die beiden nach dem Sintern ausgebildeten Messpositionen 6, 7 definieren die Oberflächenbereiche des Sensors auf denen während einer Messung die zu untersuchende Substanz und/oder eine Referenz angeordnet werden. Im Allgemeinen wird die zu untersuchende Substanz, wie in Figur 1 gezeigt, in einen mit einem Deckel 13 verschliessbaren Tiegel 12 gegeben. Als Referenz wird entweder ein leerer Tiegel oder ein mit einer Rein- oder Referenz-Substanz gefüllter Tiegel verwendet. Es sind unterschiedliche Arten von Tiegeln bekannt, wobei für exakte kalorimetrische Messungen die thermischen, mechanischen und chemischen Eigenschaften der verwendeten Tiegel bekannt sein müssen. Für kalorimetrische Messungen werden häufig Tiegel aus einem Metall oder einer Metalllegierung verwendet, wobei für die Referenz und die Probe immer identische Tiegel verwendet werden. Typische Tiegel-Materialien umfassen unter anderem Aluminium, Keramik, Stahl und Saphir.

LTCC-Keramiken zeichnen sich dadurch aus, dass sie mehrere, strukturierte Keramikelemente einer im Allgemeinen gleichartigen Keramik umfassen, welche bei niedrigen Temperaturen einmal gemeinsam gesintert werden. Typische Sintertemperaturen liegen unterhalb von etwa 900°C. Aufgrund der relativ niedrigen Sintertemperaturen können auch Thermopasten, welche niedrig schmelzende Metalle wie Gold, Silber, Kupfer, Platin, Palladium und Legierungen daraus aufweisen, für die Ausbildung der Thermoelemente verwendet werden, ohne dass die die aufgebrachten Thermopasten umfassenden Muster und Strukturen ihre Form verlieren.

Neben den Messstrecken 10, 11 werden auch die Aussparungen 3 direkt durch Strukturierung der ungesinterten Keramikelemente erzeugt und nach dem Sintern nur noch mechanisch nachbearbeitet. Die mechanische Nachbearbeitung kann notwendig sein, da das Substratmaterial beim Sintern um einen gewissen Prozentsatz von etwa 10% bis 20% schrumpft.

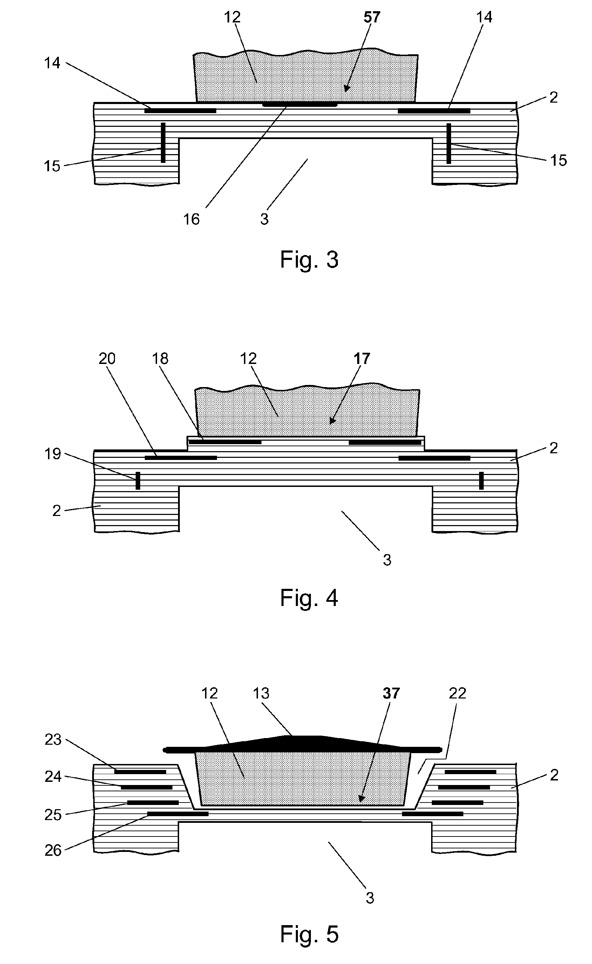

Bereits während des oben beschriebenen Herstellungsprozesses können unterschiedliche Temperaturmesselemente wie Thermoelemente und/oder elektrische Widerstände auf und/oder innerhalb verschiedener Keramikelemente ausgebildet werden. Diese Thermoelemente können Messstrecken bilden, welche nicht nur parallel zur Oberfläche des Sensors sondern auch vertikal dazu ausgebildet sind, wie es in Figur 3 gezeigt ist.

Figur 3 zeigt eine Teilvergösserung eines thermoanalytischen Sensors mit vertikalen Messstrecken 15, horizontalen Messstrecken 14 und einem unter dem Tiegel 12 ausgebildeten elektrischem Heizwiderstand 16. Der Sensor selbst entspricht weitestgehend dem Sensor aus den Figuren 1 und 2, wobei für gleiche Merkmale gleiche Bezugszeichen verwendet werden.

Der elektrische Heizwiderstand 16 ist auf einer Lage 2 grossflächig ausgebildet und dient hier als lokale Widerstandsheizung für den Sensor, so dass entweder der Tiegel 12 zusätzlich zu der in Figur 1 gezeigten Temperiervorrichtung punktuell oder ausschliesslich über den Widerstand 16 beheizt werden kann.

Der Sensor weist vertikale Messstrecken 15 und horizontale Messstrecken 14 auf, welche vorzugsweise in einem kreisförmigen Muster um die auf der Oberfläche des Sensors befindliche Messposition ausgebildet sind. Die vertikalen Messstrecken 15 bestehen aus mindestens zwei Thermoelementen, welche innerhalb und/oder auf zwei vertikal voneinander beabstandeten Lagen ausgebildet sind.

Die horizontalen Messstrecken 14 dienen dazu, eine Temperaturdifferenz zwischen mindestens zwei horizontal beabstandeten Thermoelementen zu erfassen, welche innerhalb und/oder auf einer Lage 2 ausgebildet sind.

Die Messstrecken bestehen aus mindestens zwei miteinander verbundenen Thermoelementen, welche jeweils zumindest zwei metallische Materialien mit unterschiedlicher Leitfähigkeit umfassen. Die einzelnen Thermoelemente können in einem beliebigen zwei- oder dreidimensionalen Muster um eine Messposition herum angeordnet sein.

Die um eine Messposition 57 herum angeordneten jeweils mindestens zwei Thermoelemente aufweisenden Messstrecken 14, 15 werden in einer Thermoelementanordnung zusammengefasst, welche die Temperaturschwankungen entlang des sich zwischen der Messposition 57 und der Temperiervorrichtung (s. Figur 1) ausbildenden Wärmestrompfads erfassen kann. Das Zusammenfassen der Messstrecken 14, 15 zu einer Thermoelementanordnung geschieht durch geeignete elektrische Verbindungen zwischen den die Messstrecken 14, 15 bildenden Thermoelementen, wobei die verschiedenen Thermoelemente in der Regel in Serie geschaltet werden. Die Kontaktierung kann sowohl auf einzelne Lagen oder auf nach dem Sintern aufgebrachte Schichten (s. Figur 1 und 2) gedruckte Leiterbahnen als auch am fertigen Sensor angebrachte elektrische Leitungen umfassen.

Die innerhalb und/oder auf einem Sensor horizontal und vertikal angeordneten Messstrecken ermöglichen eine dreidimensionale Erfassung der Wärmeströme, welche im Betrieb zwischen der auf der Messposition 57 befindlichen Probe oder Referenz und der Temperiervorrichtung (s. Figur 1) fliessen.

Sowohl die im Sensor angeordneten Thermoelemente der vertikalen Messstrecken 15 als auch die der horizontalen Messstrecken 14 werden bereits beim Strukturieren der Keramikelemente erzeugt oder wenigstens vorgebildet und durch die anschliessende Sinterung ausgebildet.

Figur 4 zeigt eine weitere Gestaltungsmöglichkeit eines mehrlagigen Sensors. Die Darstellung entspricht im Wesentlichen der Darstellung in Figur 3 und gleiche Merkmale weisen dieselben Bezugszeichen auf.

Der thermoanalytische Sensor weist in diesem Ausführungsbeispiel zwei horizontale Messstrecken 18, 20 und eine vertikale Messstrecke 19 auf, welche alle innerhalb des Sensors angeordnet sind. Die Messstrecken 18, 19, 20 umfassen jeweils mindestens zwei Thermoelemente, welche im Wesentlichen in einem kreisförmigen Muster um eine Messposition 17 herum ausgebildet sind. Die Messstrecken 18, 20 sind in voneinander vertikal beabstandeten Lagen angeordnet und die Messstrecke 19 ist orthogonal zu den Messtrecken 18, 20 im Sensor angeordnet.

Die Messposition 17 befindet sind auf einem Sockel 21, welcher ebenfalls durch Strukturierung einzelner Keramikelemente ausgebildet ist. Zur Bildung des Sockels 21 wurden mehrere kleinere Keramikelemente verwendet. Der komplette Sensor wird anschliessend laminiert und gesintert, so dass sich ein mehrlagiger Sensor mit den zuvor beschriebenen Merkmalen ausbildet.

Figur 5 zeigt einen Sensor mit einer Vertiefung 22 zur Aufnahme eines verschliessbaren Proben- oder Referenztiegels 12. Auf dem Boden der Vertiefung 22 ist eine Messposition 37 ausgebildet, auf der ein mit einem Deckel 13 verschliessbarer Tiegel 12 platziert werden kann. Der komplette Sensor besteht aus gesinterten keramischen Lagen 2, welche mehrere vertikal voneinander beabstandete, horizontale Messstrecken 23, 24, 25, 26 umfassen. Die Messstrecken 23, 24, 25, 26 sind auf und/oder innerhalb verschiedener Lagen 2 angeordnet, so dass der Tiegel 37 sowohl von der Seite als auch von unten von den Messstrecken 23, 24, 25, 26 umgeben ist.

Die Herstellung der Vertiefung 22 kann entweder durch Ausstanzen oder Ausschneiden der entsprechenden Flächen in den ungesinterten Keramikelementen geschehen oder durch ein nachträgliches Ausbilden der Vertiefung 22 im gesinterten Sensor, beispielsweise durch Fräsen oder Bohren. Die Ausbildung der Vertiefung 22 vor dem Sintern wird bevorzugt, da bei einer nachträglichen Bearbeitung einzelne Thermoelemente beschädigt werden könnten.

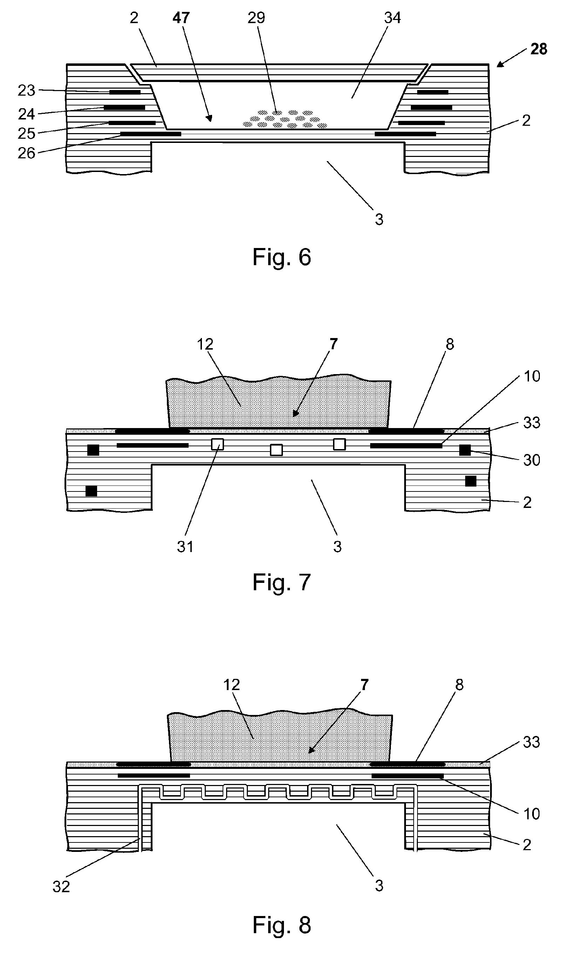

Ein weiteres Ausführungsbeispiel des Sensors ist in Figur 6 dargestellt. Der Sensor weist eine Probenaufnahme für eine Probe oder eine Referenz auf, welche im Wesentlichen einen Teil des Sensors darstellt. Im Sensor ist eine Vertiefung 34 ausgebildet, welche einen Tiegel zur Aufnahme einer Probe oder Referenz darstellt. Die Vertiefung 34 wird von einem Deckel 28 abgedeckt und verschlossen, welcher vorzugsweise ebenfalls aus einer aus mehreren Keramikelementen 2 gesinterten LTCC-Keramik besteht. Es entsteht eine mit dem Deckel 28 verschliessbare Probenkammer 34, in die eine zu untersuchende Probe 29 direkt in die Probenkammer 34 eingebracht werden kann.

Auf dem Boden der Vertiefung oder der Probenkammer 34 ist wiederum eine Messposition 47 ausgebildet, um die herum in mehreren, vertikal von einander beabstandeten Lagen Messstrecken 23, 24, 25, 26 angeordnet sind. Die die Messstrecken 23, 24, 25, 26 bildenden Thermoelemente werden auch in diesem Ausführungsbeispiel durch das Aufbringen und/oder das Einbringen unterschiedlicher Thermopasten auf und/oder in die ungesinterten Keramikelemente erzeugt, wobei die Abstände zwischen mindestens zwei beabstandeten Thermoelementen und damit die Länge der Messstrecken 23, 24, 25, 26 unterschiedlich sein können, wie es durch die unterschiedlichen Balkenlängen der Messstrecken 23, 24, 25, 26 angedeutet ist.

Die Wärmeleitfähigkeit von mehrlagigen keramischen Strukturen, wie sie die erfindungsgemässen thermoanalytischen Sensoren umfassen, kann während der Herstellung beeinflusst werden, indem entweder ein Material mit einer im Vergleich zur Keramik besseren Wärmeleitfähigkeit in bestimmte Bereiche des Sensors eingebracht wird oder dadurch dass Aussparungen in den ungesinterten Keramikelementen erzeugt werden, welche mit einem Material mit einer im Vergleich zur Keramik schlechteren Wärmeleitfähigkeit wie beispielsweise Luft gefüllt sind oder ein Vakuum aufweisen.

Bereiche mit einer hohen Wärmeleitfähigkeit entstehen, wenn einzelne Keramikelemente entweder mit einem Muster aus einer Art Wärmeleitpaste bedruckt werden oder wenn in den Keramikelemente eine oder mehrere Aussparungen erzeugt und in einem weiteren Schritt mit einem wärmeleitenden Material gefüllt werden.

Bereiche mit verminderter Wärmeleitfähigkeit entstehen durch in diesen Bereichen ausgebildeten Hohlräume oder Aussparungen, welche mit einem nur schlecht wärmeleitenden Material gefüllt sind. Die Grösse der Hohlräume wird einerseits durch die Grösse der in einem Keramikelement erzeugten Aussparungen und andererseits durch mehrere übereinander liegende Keramikelemente mit miteinander in Kontakt stehenden Aussparungen beeinflusst.

Ein Beispiel für einen Sensor, welcher Bereiche mit einer angepassten Wärmeleitfähigkeit aufweist ist in Figur 7 gezeigt. Die Darstellung des Sensors entspricht teilweise der aus Figur 2, so dass gleiche Merkmale mit gleichen Bezugszeichen versehen wurden. In einem zwischen der Aussparung 3 und der Messposition 7 liegenden Bereich des Sensors befinden sich Bereiche, welche ein thermisch isolierendes Material 31 wie Luft oder andere Isolatoren aufweisen. Aufgrund des thermisch isolierenden Materials 31 wird die Wärmeleitfähigkeit in diesem Sensorbereich verringert und so der isolierende Effekt der Aussparung 3 noch verstärkt wird. Auf Grund der erniedrigten Wärmeleitfähigkeit werden diese Sensorbereiche thermisch isoliert und verringern Wechselwirkungen zwischen den Thermoelementanordnungen und den Wärmestrompfade.

Sensorbereiche am Rand oder zwischen zwei Messpositionen sollten zur Erhöhung der Wärmeübertragung zwischen der Temperiervorrichtung und der Messposition 7 eine verbesserte Wärmeleitfähigkeit aufweisen. Diese Bereiche stehen zumindest teilweise direkt mit der Temperiervorrichtung in Kontakt. Eine Verbesserung der Wärmeleitfähigkeit wird erreicht, in dem Aussparungen mit einem Material 30, welches eine im Vergleich zur Keramik bessere Wärmeleitfähigkeit aufweist, verfüllt werden oder das Material 30 in vorgegebenen Mustern lokal begrenzt auf einzelne Keramikelemente aufgebracht wird.

Figur 8 zeigt einen thermoanalytischen Sensor mit einer im Sensor ausgebildeten, hier mäanderförmigen Leitung 32 für Temperierfluide. In diesem Ausführungsbeispiel verläuft die Leitung 32 vor allem unterhalb der Messposition 7, wobei sie sich Idealerweise unter der gesamten die Messposition bildenden Fläche ausdehnt. Die Form der Leitung kann z. B. auch spiralförmig sein. Die Leitung 32 entsteht durch die Erzeugung miteinander in Verbindung stehender Hohlräume in den ungesinterten Keramikelementen. Beim Sintern werden die einzelnen Keramikelemente fest miteinander verbunden, so dass eine rohrartige Leitung 32 mit festen, definierten Wänden entsteht, durch die Temperierfluide geleitet werden können. Die Leitung 32 kann sowohl zum Kühlen als auch zum Erwärmen des Sensors bzw. der darauf stehenden Tiegel verwendet werden. Je nach Einsatzgebiet werden temperierte Flüssigkeiten oder Gase, wie beispielsweise Wasser, Luft oder flüssiger Stickstoff, durch die Leitung 32 geleitet. Zur Bewegung der Fluide dient beispielsweise eine herkömmliche, hier nicht dargestellte Pumpe, welche mit der Leitung 32 verbunden ist. Die Leitung 32 ist derart im Sensor ausgebildet, dass sie mindestens eine aus dem Sensor herausführende Öffnung umfasst.

Die vorgestellten Ausführungsformen zeigen thermoanalytische Sensoren mit unterschiedlichen Eigenschaften und Merkmalen. Die verschiedenen Eigenschaften und Merkmale wurden zur besseren Übersicht in verschiedenen Ausführungsbeispielen dargestellt, wobei es auch möglich ist, einzelne, mehrere oder alle aufgezeigten Merkmale und Eigenschaften in einem Sensor zu realisieren.

Bei dem erfindungsgemässen thermoanalytischen Sensor kann es sich je nach Ausbildung des mindestens einen Sensors um einen Sensor für kalorimetrische Messungen handeln, welcher nach dem Leistungskompensationsprinzip oder nach einer Differenz-Methode arbeitet.

Die Ausführungsbeispiele umfassen vor allem thermoanalytische Sensoren mit zwei Messpositionen, einer Proben-Position und einer Referenz-Position. Es ist allerdings auch möglich, dass der Sensor mindestens eine Referenz-Position und mehr als eine Probenposition umfasst, oder dass sich mindestens eine Probe und eine Referenz auf mindestens zwei voneinander getrennten und nur über mindestens eine Messeinheit und eventuell zusätzlich eine Steuer- und/oder Regeleinheit verbundenen Sensoren befinden.

Ein erfindungsgemässer Sensor umfasst mindestens eine im Sensor ausgebildete Thermoelementanordnung, welche mindestens ein weiteres auf der Oberfläche des Sensors aufgebrachtes Thermoelement umfassen kann.

In den Figuren 1 bis 8 wurden die Sensoren immer im Längsschnitt dargestellt. Die aufgezeigten strukturellen Merkmale der Sensoren, wie beispielsweise die Thermoelemente, die Leitung und die Bereiche mit veränderter Wärmeleitfähigkeit, können entweder zweidimensional oder dreidimensional ausgebildet sein.

Die Messstrecken können in einem beliebigen Muster um die einzelnen Messpositionen herum ausgebildet sein, wobei ein im weitesten Sinne kreisförmiges oder sternförmiges Muster bevorzugt wird. Umfasst ein Sensor mehrere verschiedene, Messstrecken bildende Thermoelemente in unterschiedlichen Lagen des Sensors, so bietet es sich an, diese bezogen auf die einzelnen Lagen gegeneinander versetzt auszubilden, so dass insgesamt der Wärmefluss in einem grösseren Bereich erfasst werden kann. Es ist auch möglich, Thermoelemente und/oder Messstrecken nicht nur innerhalb einer Lage sondern auch über mehrere Lagen hinweg auszubilden.

Ein erfindungsgemässer thermoanalytischer Sensor wird vor allem bei kalorimetrischen Messungen eingesetzt, wobei es auch möglich ist die Wärmeleitfähigkeit einer Substanz und/oder eines Materials mit einem derartigen Sensor zu bestimmen.

Einzelne Messstrecken umfassen immer mindestens zwei Thermoelemente, welche aus unterschiedlichen Materialien bestehen. Zur Ausbildung von Thermoelementen werden beispielsweise Thermopasten verwendet, welche Gold, Platin, Silber, Palladium, Kupfer und Legierungen dieser Metalle aufweisen.

Anstelle oder auch zusätzlich zu den Messstrecken kann eine Temperaturerfassung und/oder die Bestimmung einer Absoluttemperatur mit Temperaturmesselementen erfolgen, welche die Temperatur mittels eines elektrischen Widerstands erfassen. Elektrische Widerstände können sowohl in einer oder mehreren Lagen und/oder in einer nach dem Sintern beispielsweise in Dickfilmtechnik aufgebrachten Schicht ausgebildet werden.

### Bezugszeichenliste

- 1: Sensor
- 2: Lage
- 3: Aussparung
- 4: elektrischer Widerstand
- 5: Temperiervorrichtung
- 6: Messposition
- 7: Messposition
- 8: Messstrecke
- 9: Messstrecke
- 10: Messstrecke
- 11: Messstrecke
- 12: Tiegel
- 13: Deckel
- 14: horizontale Messstrecke
- 15: vertikale Messstrecke
- 16: elektrischer Widerstand
- 17: Messposition
- 18: horizontale Messstrecke
- 19: horizontale Messstrecke
- 20: vertikale Messstrecke
- 21: Sockel
- 22: Vertiefung
- 23: horizontale Messstrecke
- 24: horizontale Messstrecke
- 25: horizontale Messstrecke
- 26: horizontale Messstrecke
- 27: Messposition
- 28: Deckel
- 29: Substanz
- 30: Wärmeleitendes Material
- 31: Wärmeisolierender Bereich / Hohlraum
- 32: Leitung
- 33: Schicht
- 34: Vertiefung; Probenkammer
- 37: Messposition
- 47: Messposition
- 57: Messposition

## Patentansprüche

1. Thermoanalytischer Sensor für kalorimetrische Messungen, welcher mit einer Temperiervorrichtung (5) zusammenwirkt, mindestens eine auf dem Sensor ausgebildete Messposition (6, 7) und mindestens ein Temperaturmesselement aufweist,
wobei der Sensor im Betrieb thermisch mit der Temperiervorrichtung (5) gekoppelt ist und sich zwischen der Temperiervorrichtung (5) und der mindestens einen Messposition (6, 7) ein Wärmestrompfad ausbildet,
wobei der Sensor mehrere Lagen (2) aufweist, welche im Wesentlichen aus durch gemeinsames Sintern fest miteinander verbundenen und im grünen Zustand strukturierbaren Keramikelementen ausgebildet sind, wobei zumindest ein Teil der Keramikelemente strukturiert wurde,
**dadurch gekennzeichnet, dass**
der Sensor mindestens eine Thermoelementanordnung zur Erzeugung eines thermoelektrischen Signals aufweist, welche entlang des Wärmestrompfads ausgebildet ist und die sich ausdehnenden Wärmeströme dreidimensional erfassen kann, und dass
das Temperaturmesselement mindestens eine Messtrecke (8-11, 14, 15, 18, 19, 23- 26) aufweist, welche mindestens zwei Thermoelemente umfasst und welche einen Teil der Thermoelementanordnung darstellt.

2. Thermoanalytischer Sensor nach Anspruch 1, **dadurch gekennzeichnet, dass** die Thermoelementanordnung mindestens ein innerhalb oder auf einer Lage (2) ausgebildetes Thermoelement umfasst.

3. Thermoanalytischer Sensor nach Anspruch 2, **dadurch gekennzeichnet, dass** dieser mindestens eine Messstrecke (10, 11, 14, 15, 18, 19, 23- 26) umfasst, welche mindestens zwei Thermoelemente umfasst, die innerhalb und/oder auf einer Lage (2) ausgebildet sind.

4. Thermoanalytischer Sensor nach einem der Ansprüche 1 bis 3, **dadurch gekennzeichnet, dass** dieser mindestens eine Messstrecke (15, 19) mit mindestens zwei Thermoelemente umfasst, welche innerhalb und/oder auf verschiedenen Lagen (2) ausgebildet sind.

5. Thermoanalytischer Sensor nach einem der Ansprüche 1 bis 4, **dadurch gekennzeichnet, dass** die Thermoelementanordnung mindestens ein nach dem Sintern auf einer Oberfläche des Sensors ausgebildetes Thermoelement (8, 9) umfasst.

6. Thermoanalytischer Sensor nach einem der Ansprüche 1 bis 5, **dadurch gekennzeichnet, dass** das Temperaturmesselement mindestens einen elektrischen Widerstand (4, 16) umfasst.

7. Thermoanalytischer Sensor nach einem der Ansprüche 1 bis 6, **dadurch gekennzeichnet, dass** im Sensor mindestens ein elektrischer Heizwiderstand (16) ausgebildet ist.

8. Thermoanalytischer Sensor nach einem der Ansprüche 1 bis 7, **dadurch gekennzeichnet, dass** im Sensor mindestens eine Leitung (32) für Fluide, insbesondere für Temperierfluide ausgebildet ist.

9. Thermoanalytischer Sensor nach einem der Ansprüche 1 bis 8, **dadurch gekennzeichnet, dass** dieser mindestens einen Sensorbereich mit einer Wärmeleitfähigkeit aufweist, die von der Wärmeleitfähigkeit unstrukturierter Keramikelemente abweicht.

10. Thermoanalytischer Sensor nach Anspruch 9, **dadurch gekennzeichnet, dass** der Sensorbereich mit vorgegebener Wärmeleitfähigkeit mindestens eine Aussparung (31) und/oder mindestens eine verfüllte Aussparung (30) aufweist.

11. Thermoanalytischer Sensor nach einem der Ansprüche 1 bis 10, **dadurch gekennzeichnet, dass** die Keramikelemente Aluminiumoxid aufweisen.

12. Verfahren zu Herstellung eines thermoanalytischen Sensors für kalorimetrische Messungen nach einem der Ansprüche 1 bis 11, **dadurch gekennzeichnet, dass** die Herstellung ein Verfahren zur Herstellung von low temperature cofired ceramics (LTCC) mit den folgenden Schritten umfasst: Erzeugen von Keramikelementen mit vorgegebener Grösse und Dicke; Strukturieren zumindest eines Teils der Keramikelemente; Stapeln der Keramikelementen; Laminieren der Keramikelement-Stapels; Sintern des Keramikelement-Stapels in einem einzigen Brennvorgang, wodurch die einzelnen Keramikelemente fest miteinander verbunden werden.

13. Verfahren nach Anspruch 12, **dadurch gekennzeichnet, dass** das Strukturieren eines Keramikelements einen oder mehrere der folgenden Schritte umfasst:
Ausbilden von mindestens einer Aussparung und/oder Verfüllen mindestens einer Aussparung.

14. Verfahren nach einem der Ansprüche 12 oder 13, **dadurch gekennzeichnet, dass** das Strukturieren das Beschichten und/oder das Bedrucken einer Oberfläche eines Keramikelements umfasst.

15. Verfahren nach einem der Ansprüche 12 bis 14, **dadurch gekennzeichnet, dass** der Sensor nach der Sinterung mechanisch nachbearbeitet wird.

16. Verfahren nach einem der Ansprüche 12 bis 15, **dadurch gekennzeichnet, dass** eines oder mehrere der folgenden Elemente innerhalb und/oder auf dem Sensor ausgebildet wird: ein Temperaturmesselement, ein elektrischer Widerstand, ein Thermoelement, eine Messstrecke, eine Thermoelementanordnung, eine Leitung für Fluide, ein elektrischen Heizwiderstand und/oder ein Sensorbereich mit einer Wärmeleitfähigkeit, welche von der Wärmeleitfähigkeit der Keramik abweicht.

17. Verfahren nach einem der Ansprüche 12 bis 16, **dadurch gekennzeichnet, dass** nach der Sinterung mindestens ein Thermoelement auf einer Oberfläche des Sensors ausgebildet wird, welches einen Teil der Thermoelementanordnung darstellt.

18. Verfahren nach Anspruch 16 oder 17, **dadurch gekennzeichnet, dass** nach dem Sintern zumindest das Temperaturmesselement und/oder die Thermoelementanordnung kontaktiert und mit einer Steuer- und/oder Regeleinheit verbunden werden.

## Claims

1. Thermoanalytical sensor for calorimetric measurements which cooperates with a thermostatting device (5) and comprises at least one measurement position (6, 7) formed on the sensor as well as at least one temperature-measuring element,
wherein during operation, the sensor is thermally coupled to the thermostatting device (5), and a heat flow path establishes itself between the thermostatting device (5) and the at least one measurement position (6, 7), the sensor comprising a plurality of layers (2) that are formed substantially by ceramic elements which have been solidly bonded to each other by undergoing a sintering process together and in their green state are capable of being provided with a structure, wherein at least a part of the ceramic elements were subjected to the structuring,
**characterized in that**
the sensor comprises at least one thermocouple arrangement that is formed along said heat flow path for generating a thermoelectric signal and is able to capture the propagation of heat in three dimensions, and that
the temperature-measuring element comprises at least one measurement chain (8-11, 14, 15, 18, 19, 23-26) which comprises at least two thermocouples and represents a part of the thermocouple arrangement.

2. Thermoanalytical sensor according to claim 1, **characterized in that** the thermocouple arrangement comprises at least one thermocouple formed within or on a layer (2).

3. Thermoanalytical sensor according to claim 2, **characterized in that** said thermoanalytical sensor comprises at least one measurement chain (10, 11, 14, 15, 18, 19, 23-26) comprising at least two thermocouples which are formed within and/or on a layer (2).

4. Thermoanalytical sensor according to one of the claims 1 to 3, **characterized in that** said thermoanalytical sensor comprises at least one measurement chain (15, 19) comprising at least two thermocouples which are formed within and/or on different layers (2).

5. Thermoanalytical sensor according to one of the claims 1 to 4, **characterized in that** the thermocouple arrangement comprises at least one thermocouple (8, 9) formed on a surface of the sensor after the sintering process.

6. Thermoanalytical sensor according to one of the claims 1 to 5, **characterized in that** the temperature-measuring element comprises at least one electrical resistor (4, 16).

7. Thermoanalytical sensor according to one of the claims 1 to 6, **characterized in that** at least one electrical heating resistor (16) is formed in the sensor.

8. Thermoanalytical sensor according to one of the claims 1 to 7, **characterized in that** at least one conduit (32) for fluids, in particular thermostatting fluids, is formed in the sensor.

9. Thermoanalytical sensor according to one of the claims 1 to 8, **characterized in that** said thermoanalytical sensor comprises at least one sensor portion with a thermal conductivity that differs from the thermal conductivity of unstructured ceramic elements.

10. Thermoanalytical sensor according to claim 9, **characterized in that** said sensor portion with a given thermal conductivity comprises at least one hollowed-out space (31) and/or at least one back-filled hollow space (30).

11. Thermoanalytical sensor according to one of the claims 1 to 10, **characterized in that** the ceramic elements comprise aluminum oxide.

12. Method of manufacturing a thermoanalytical sensor for calorimetric measurements according to one of the claims 1 to 11, **characterized in that** the method includes a process for the manufacture of low-temperature co-fired ceramics (LTCC) with the following steps:
producing ceramic elements of prescribed size and thickness; structuring at least a part of the ceramic elements; stacking the ceramic elements; laminating the stack of ceramic elements; sintering the stack of ceramic elements in a single firing process, whereby the individual ceramic elements are solidly bonded to each other.

13. Method according to claim 12, **characterized in that** the structuring of a ceramic element comprises one or more of the following steps: forming at least one hollow space and/or filling at least one hollow space.

14. Method according to one of the claims 12 or 13, **characterized in that** the structuring comprises the coating and/or the printing of a surface of a ceramic element.

15. Method according to one of the claims 12 to 14, **characterized in that** the sensor is subjected to a mechanical finishing operation after the sintering.

16. Method according to one of the claims 12 to 15, **characterized in that** one or more of the following elements are formed within and/or on the sensor: a temperature-measuring element, an electrical resistor, a thermocouple, a measurement chain, a thermocouple arrangement, a conduit for fluids, an electrical heating resistor and/or a sensor portion with a thermal conductivity that deviates from the thermal conductivity of the ceramic material.

17. Method according to one of the claims 12 to 16, **characterized in that** after the sintering at least one thermocouple that represents a part of a thermocouple arrangement is formed on a surface area of the sensor.

18. Method according to claim 16 or 17, **characterized in that** after the sintering at least the temperature-measuring element and/or the thermocouple arrangement are provided with contact terminals and connected to a controller unit.

## Revendications

1. Capteur thermo-analytique pour des mesures calorimétriques, lequel coopère avec un dispositif de régulation thermique (5) et comporte au moins une position de mesure (6, 7) définie sur le capteur et au moins un élément de mesure de température,
dans lequel le capteur est couplé thermiquement au dispositif de régulation thermique (5), et au moins une trajectoire de flux thermique est définie entre le dispositif de régulation thermique (5) et l'au moins une position de mesure (6, 7),
dans lequel le capteur comporte plusieurs couches (2) constituées essentiellement d'éléments en céramique structurables à l'état vert et reliés fixement les uns aux autres à l'aide d'un frittage conjoint, au moins une partie des éléments en céramique ayant été structurée,
**caractérisé en ce que**
le capteur comporte au moins un ensemble d'éléments thermiques destinés à produire un signal thermoélectrique, lequel est formé le long de la trajectoire de flux thermique et peut détecter les flux thermiques dilatés de façon tridimensionnelle, et **en ce que** l'élément de mesure de température comporte au moins une section de mesure (8-11, 14, 15, 18, 19, 23-26) comprenant au moins deux éléments thermiques et représentant une partie de l'ensemble d'éléments thermiques.

2. Capteur thermo-analytique selon la revendication 1, **caractérisé en ce que** l'ensemble d'éléments thermiques comprend au moins un élément thermique formé à l'intérieur d'une couche (2) ou sur celle-ci.

3. Capteur thermo-analytique selon la revendication 2, **caractérisé en ce que** celui-ci comprend au moins une section de mesure (10, 11, 14, 15, 18, 19, 23-26) comprenant deux éléments thermiques formés à l'intérieur d'une couche (2) et/ou sur celle-ci.

4. Capteur thermo-analytique selon l'une des revendications 1 à 3, **caractérisé en ce que** celui-ci comprend au moins une section de mesure (15, 19) avec au moins deux éléments thermiques formés à l'intérieur de différentes couches (2) ou sur celles-ci.

5. Capteur thermo-analytique selon l'une des revendications 1 à 4, **caractérisé en ce que** l'ensemble d'éléments thermiques comprend au moins un élément thermique (8, 9) formé sur une surface du capteur suite au frittage.

6. Capteur thermo-analytique selon l'une des revendications 1 à 5, **caractérisé en ce que** l'élément de mesure de température comprend au moins une résistance électrique (4, 16).

7. Capteur thermo-analytique selon l'une des revendications 1 à 6, **caractérisé en ce qu'**au moins une résistance électrique (16) est formée dans le capteur.

8. Capteur thermo-analytique selon l'une des revendications 1 à 7, **caractérisé en ce qu'**au moins un conduit (32) pour des fluides, en particulier pour des fluides de régulation de température, est formé dans le capteur.

9. Capteur thermo-analytique selon l'une des revendications 1 à 8, **caractérisé en ce que** celui-ci comporte au moins une zone de capteur avec une conductibilité thermique différente de la conductibilité thermique d'éléments en céramique non structurés.

10. Capteur thermo-analytique selon la revendication 9, **caractérisé en ce que** la zone de capteur présentant une conductibilité thermique prédéfinie comporte au moins un évidement (31) et/ou au moins un évidement rempli (30).

11. Capteur thermo-analytique selon l'une des revendications 1 à 10, **caractérisé en ce que** les éléments en céramique comportent de l'oxyde d'aluminium.

12. Procédé pour la fabrication d'un capteur thermo-analytique pour des mesures calorimétriques selon l'une des revendications 1 à 11, **caractérisé en ce que** la fabrication comprend un procédé pour la fabrication de céramiques cuites conjointement à basse température (LTCC), avec les étapes suivantes : production d'éléments en céramique présentant une taille et une épaisseur prédéfinies ; structuration d'au moins une partie des éléments en céramique ; empilage des éléments en céramique ; laminage de la pile d'éléments en céramique ; frittage de la pile d'éléments en céramique au cours d'une opération de cuisson unique, moyennant quoi les différents éléments en céramique sont reliés fixement les uns aux autres.

13. Procédé selon la revendication 12, **caractérisé en ce que** la structuration d'un élément en céramique comprend l'une ou plusieurs des étapes suivantes : formation d'au moins un évidement et/ou remplissage d'au moins un évidement.

14. Procédé selon l'une des revendications 12 ou 13, **caractérisé en ce que** la structuration comprend le revêtement et/ou l'impression d'une surface d'un élément en céramique.

15. Procédé selon l'une des revendications 12 à 14, **caractérisé en ce que** le capteur est traité mécaniquement après le frittage.

16. Procédé selon l'une des revendications 12 à 15, **caractérisé en ce que** l'un ou plusieurs des éléments suivants sont formés à l'intérieur du capteur et/ou sur celui-ci : un élément de mesure de température, une résistance électrique, un élément thermique, une section de mesure, un ensemble d'éléments thermiques, un conduit pour fluides, une résistance électrique chauffante et/ou une zone de capteur présentant une conductibilité thermique différente de la conductibilité thermique de la céramique.

17. Procédé selon l'une des revendications 12 à 16, **caractérisé en ce qu'**au moins un élément thermique représentant une partie de l'ensemble d'éléments thermiques est formé sur une surface du capteur après le frittage.

18. Procédé selon la revendication 16 ou 17, **caractérisé en ce qu'**après le frittage, au moins l'élément de mesure de température et/ou l'ensemble d'éléments thermiques est/sont mis en contact et relié(s) à une unité de commande et/ou de réglage.
